# EUROPEAN PATENT SPECIFICATION

(11) **EP 0 534 570 B1**
(45) Date of publication and mention of the grant of the patent: **03.02.1999**
(21) Application number: 92202960.8
(22) Date of filing: 25.09.1992
(51) Int. Cl.: C08G 67/02

(54) **Process for the preparation of polymers of carbon monoxide with olefinically unsaturated compounds**
Verfahren zur Herstellung von Polymeren aus Kohlenmonoxyd und olefinisch ungesättigten Verbindungen
Procédé de préparation de polymères de monoxyde de carbone et de composés oléfiniquement insaturés

(30) Priority: 27.09.1991 NL 9101638
(43) Date of publication of application: 31.03.1993
(73) Proprietor: SHELL INTERNATIONALE RESEARCH MAATSCHAPPIJ B.V., 2596 HR Den Haag (NL)
(72) Inventor: Gautier, Pieter Antoine, NL-1031 CM Amsterdam (NL); Wijngaarden, Rudolf Jacobus, NL-1031 CM Amsterdam (NL); Keijsper, Johannes Jacobus, NL-1031 CM Amsterdam (NL)

(56) References cited:
- EP-A- 0 248 483
- EP-A- 0 404 228
- EP-A- 0 443 687
- NL-A- 8 901 311

## Description

The invention relates to a process for the preparation of linear alternating polymers of carbon monoxide with one or more olefinically unsaturated compounds.

Linear alternating polymers of carbon monoxide with one or more olefinically unsaturated compounds, i.e. linear polymers in which the units originating in carbon monoxide and the units originating in the olefinically unsaturated compounds are present in a substantially alternating order, can be prepared by contacting the monomers at elevated temperature and pressure with a catalyst containing a Group VIII metal.

The above-mentioned polymer preparation can be carried out in two ways which, depending on the continuous phase in which the polymerization takes place, are referred to as liquid phase polymerization and gas phase polymerization. In the liquid phase polymerization the continuous phase is usually formed by a liquid diluent in which the catalyst is soluble but the polymers formed are insoluble or virtually insoluble. At the end of the polymerization the polymers are separated from the diluent and the pure diluent intended for a subsequent polymerization is recovered from the remaining liquid. In the gas phase polymerization using a catalyst on carrier the continuous phase is formed by gaseous carbon monoxide and optionally one or more of the other monomers, in so far as they are present in gaseous form in the reactor.

For the preparation of the polymers on an industrial scale, gas phase polymerization is much to be preferred to liquid phase polymerization in view of the fact that with gas phase polymerization the above-mentioned separation step, as well as the purification step, can be omitted. When implemented on an industrial scale, these separation and purification steps involve a considerable expense.

The gas phase polymerization can in principle be carried out in two manners, viz. batchwise or continuous. Batch preparation of the polymers is carried out by forcing monomers into a reactor, which contains the catalyst on carrier and which is at the desired temperature, until a certain pressure is reached. As the polymerization progresses the pressure falls and the quantity of polymer in the reactor increases. The polymerization is continued until the reactor is filled to a certain degree with polymer. In principle, the only parameter which remains constant in batch polymer preparation is the temperature. A variant of the batch polymer preparation is the semi-batch preparation in which besides the temperature also the pressure is kept constant by adding monomers to the reactor during the polymerization. In the continuous polymer preparation the catalyst and the monomers are added continuously to the reactor, which contains the catalyst on carrier and which is at the desired temperature and pressure, and polymers are withdrawn continuously from the reactor. During the continuous polymer preparation the temperature, the pressure and the quantity of polymer in the reactor are kept substantially constant. After a running-in period during which the quantity of polymer in the reactor increases to the desired value, a stationary state is established which is characterized by a substantially constant quantity of polymer being discharged from the reactor per unit time, the polymer discharged having substantially constant properties.

For the preparation of the polymers by gas phase polymerization on an industrial scale, a continuous process is greatly to be preferred to batch or semi-batch production for the following reasons. In the first place, the continuous process gives a higher polymer production because the production does not, as in batch preparation, have to be frequently interrupted for charging and discharging the reactor. Since continuous operation, in contrast to batch production, is characterized by all the reaction parameters remaining substantially constant, a continuous process is easier to control and is more suitable for automation. Finally, the continuous process produces polymers which exhibit less variation in properties and therefore have a more constant quality than those obtained from batch production.

The applicant carried out an investigation into the preparation of the present linear alternating polymers by continuous gas phase polymerization using Group VIII-metal containing catalysts on a carrier which was essentially the linear alternating polymer. It appeared that the polymerization activity of the catalysts was not entirely satisfactorily, due to a rapid decay of the catalyst activity in such gas-phase polymerization process.

Surprisingly it has now been found that in the gas phase process an attractive catalyst performance can be achieved by using as the catalyst carrier a linear alternating polymer of carbon monoxide and an olefinically unsaturated compound which is obtained in a gas phase process and which has been subjected to a treatment in which its average particle diameter has been reduced, such as grinding, before loading the carrier with catalyst. Quite unexpectedly, this size reducing treatment leads to a dramatic decrease of the rate of decay of the catalyst activity. It has also appeared that, as an additional advantage, the size reducing treatment leads to an increased initial activity of the catalyst. Another additional advantage relating to this finding resides in the possibility of applying in the continuous gas phase process a partial recycle of the polymer product for subsequent use as a catalyst carrier, as opposed to obtaining a catalyst carrier from an external source.

The present patent application therefore relates to a process for the preparation of polymers,
a) wherein linear alternating polymers of carbon monoxide with one or more olefinically unsaturated compounds are prepared by contacting the monomers at elevated temperature and pressure with a catalyst containing a Group VIII metal on a carrier,
b) wherein the preparation is carried out continuously and as a gas phase polymerization, and
c) wherein during the polymerization a fraction of the formed polymer product is recycled to the polymerization mixture, subsequent to reducing the average particle diameter thereof and to supplying fresh catalyst thereto.

In a preferred embodiment of the process of the invention the fraction to be recycled has been obtained from the formed polymer product by grinding, this fraction constitutes 0.1-10 %w of the formed polymer product and has an average particle diameter which is less than 75% of that of the formed product.

The polymer particles intended for recycling are obtained from the polymer product by size reduction and optionally by separation. Separation can take place by, for example, sieving, fluidization, pneumatic segregation or by the use of cyclones. Size reduction can be carried out by, for example, grinding or crushing.

The quantity of polymer which is recycled in the process according to the invention can vary within wide limits. The quantity of polymer to be recycled preferably amounts to 0.1-10 %w of the formed polymer product, more preferably 0.5-5 %w.

To a person skilled in the art it will be clear that the polymer which is recycled as a carrier may be supplemented with fresh carrier from an external source. Such fresh carrier may also be used in the initial, start-up phase of the continuous process.

The carrier used in the process according to the invention, i.e. the fresh carrier, as well as the polymer which is recycled as a carrier, has preferably an average particle diameter of between 1 and 2000 µ and in particular between 10 and 1000 µ. The fraction to be recycled preferably has an average particle diameter which is less than 90%, in particular less than 75% and more in particular less than 50% of that of the formed polymer product.

In the continuous gas phase polymerization according to the invention, a catalyst is used which contains a Group VIII metal. In this patent application Group VIII metals are understood to be the noble metals ruthenium, rhodium, palladium, osmium, iridium and platinum, as well as the iron group metals iron, cobalt and nickel. There is preference for catalysts containing palladium, nickel or cobalt as Group VIII metal. There is particular preference for palladium as Group VIII metal. The Group VIII metal is preferably incorporated into the catalyst in the form of a salt, preferably in the form of a salt of a carboxylic acid, in particular in the form of an acetate.

In addition to a Group VIII metal, the catalysts preferably contain a bidentate ligand which can form a complex with the Group VIII metal via two phosphorus-, nitrogen- and/or sulphur-containing dentate groups. Preferred nitrogen bidentate ligands are compounds of the general formula 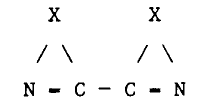 in which X represents an organic bridging group containing three or four atoms in the bridge, of which at least two are carbon atoms, such as 2,2'-bipyridine and 1,10-phenanthroline. Preferred sulphur bidentate ligands are compounds of the general formula R¹S-R-SR¹ in which R¹ represents an optionally polar substituted hydrocarbyl group and R represents a divalent organic bridging group containing at least two carbon atoms in the bridge, such as 1,2-bis(ethyl-thio)ethane and cis-1,2-bis-(benzylthio)ethene. There is preference for the use of phosphorus bidentate ligands of the general formula (R¹)₂P-R-P(R¹)₂ in which R and R¹ have the aforementioned meanings. There is further preference for the use of such phosphorus bidentate ligands in which R¹ represents an aromatic hydrocarbyl group carrying at least one alkoxy substituent at an ortho position relative to phosphorus. A very suitable compound for the present purpose is 1,3-bis[bis(2-methoxyphenyl)phosphino]-propane.

If a nitrogen or sulphur bidentate ligand is used in the catalysts, the quantity employed is preferably 0.5-100 and in particular 1-50 mol per gram atom Group VIII metal. If a phosphorus bidentate ligand is used, the quantity employed is preferably 0.5-2 and in particular 0.75-1.5 mol per gram atom Group VIII metal.

Besides a Group VIII metal and a phosphorus, nitrogen and/or sulphur bidentate ligand, the catalysts preferably contain an acid component. Suitable acid components are Lewis acids of the general formula MFₙ wherein M represents an element which can form a Lewis acid with fluorine, F represents fluorine and n has the value 3 or 5, such as boron trifluoride, aluminium trifluoride and antimony pentafluoride.

There is particular preference for Lewis acid/Brönsted acid based mixtures as acid component in the catalysts. Preferably, these mixtures are based on 0.1-10 and in particular 0.5-5 mol Brönsted acid per mol Lewis acid. Very suitable Lewis acids for application in these mixtures are fluorides such as boron trifluoride, titanium tetrafluoride, phosphorus pentafluoride and antimony pentafluoride. As Brönsted acid, hydrofluoric acid is very suitable. Acid components of the present type are preferably selected from: tetrafluoroboric acid, hexafluorotitanic acid, hexafluorophosphoric acid and hexafluoroantimonic acid.

The quantity of acid component in the catalysts is preferably 0.5-200 and in particular 1-100 mol per gram atom Group VIII metal, with the proviso that if a Lewis acid/Brönsted acid based mixture is used, these quantities relate to the Lewis acid present in the mixture.

To enhance the activity of the catalysts, an organic oxidizing agent can also be incorporated therein. Aromatic nitro compounds such as nitrobenzene are very suitable for this purpose. The quantity of organic oxidizing agent used is preferably 5-5000 and in particular 10-1000 mol per gram atom Group VIII metal.

In the continuous gas phase polymerization according to the invention a catalyst is used which contains a Group VIII metal deposited on a carrier. There is preference for catalysts on carrier which per kg carrier contain 10-100,000, in particular 25-10,000 and more in particular 50-1000 mg Group VIII metal.

The deposition of the catalyst onto the carrier can very suitably take place by impregnating the carrier with a solution or suspension of the catalyst. If the catalyst comprises a plurality of components, the catalyst preparation can take place either by depositing all components together or by depositing one or more of the components separately onto the carrier by impregnation. As the fresh carrier for the catalyst, both inorganic and organic carriers are eligible, such as silica, alumina, talc, carbon, cellulose, dextrose and dextran gel. Polymers can also be used as carriers, e.g. polyethylene, polypropylene and polystyrene. Preferably a polymer is used which corresponds as regards structure and composition substantially with that of the polymer to be prepared.

The olefinically unsaturated compounds which according to the invention can be polymerized with carbon monoxide are eligibly compounds which consist exclusively of carbon and hydrogen, as well as compounds which besides carbon and hydrogen also contain one or more hetero atoms. The process according to the invention is preferably applied for the preparation of polymers of carbon monoxide with one or more olefinically unsaturated hydrocarbons. Examples of suitable hydrocarbon monomers are ethene, propene, butene-1, hexene-1, octene-1, styrene, cyclopentane, norbornene and dicyclopentadiene. The process according to the invention is in particular very suitable for the preparation of copolymers of carbon monoxide with ethene and terpolymers of carbon monoxide with ethene and an α-olefin, in particular propene.

The quantity of catalyst used in the process according to the invention can vary within wide limits. Per mol olefinically unsaturated compound to be polymerized, a quantity of catalyst is preferably used which contains 10⁻⁷ to 10⁻³ and in particular 10⁻⁶ to 10⁻⁴ gram atom Group VIII metal.

The polymerization is preferably carried out at a temperature of 25-150 °C and a pressure of 2-150 bar and in particular at a temperature of 30-130 °C and a pressure of 5-100 bar. The molar ratio of the olefinically unsaturated compounds relative to carbon monoxide is preferably 10:1 to 1:10 and in particular 5:1 to 1:5.

The following experiments are presented as evidence for the invention.

### Experiment 1

A carbon monoxide/ethene copolymer was prepared as follows. A catalyst composition was prepared by absorbing a catalyst solution comprising:
1.5 ml methanol,
0.5 ml tetrahydrofuran,
0.0095 mmol palladium acetate,
0.024 mmol tetrafluoroboric acid, and
0.0104 mmol 1,3-bis[bis(2-methoxyphenyl)phosphino]propane,
on 8 g of a linear alternating carbon monoxide/ethene copolymer with an average particle diameter (d) of 275 µ which copolymer was obtained in a liquid phase process. The catalyst thus prepared with a palladium content of 126 ppmw was introduced into a stirred autoclave with a volume of 300 ml. After the air in the autoclave had been displaced by nitrogen, the autoclave content was brought to 85 °C and a 1:1 carbon monoxide/ethene mixture was introduced until a pressure of 50 bar was reached. Finally, hydrogen was introduced until a pressure of 55 bar was reached. During the polymerization the pressure was maintained at 55 bar by continuously supplying a 1:1 carbon monoxide/ethene mixture. After 18 hours the polymerization was terminated by cooling the reaction mixture to room temperature and releasing the pressure. 112 g copolymer was obtained with a d of 500 µ and a palladium content of 9 ppmw. The average polymerization rate over the first 4 hours was 9.8 kg copolymer/(g palladium.hour). The average polymerization rate over the first 18 hours was 5.7 kg copolymer/(g palladium.hour).

### Experiment 2

A carbon monoxide/ethene copolymer was prepared in substantially the same way as in experiment 1, but with the difference that the polymer obtained according to experiment 1, having a d of 500 µ, was used as the carrier polymer. Like in experiment 1, 8 g of the polymer carrier was treated with the solution containing 0.0095 mmol palladium acetate to obtain a content of fresh palladium of 126 ppmw. 26 g copolymer was obtained with a d of 750 µ and a palladium content of 39 ppmw. The average polymerization rate over the first 4 hours was 2.0 kg copolymer/(g palladium.hour). The average polymerization rate over the first 18 hours was 1.0 kg copolymer/(g palladium.hour).

### Experiment 3

A carbon monoxide/ethene copolymer was prepared in substantially the same way as in experiment 1, but with the following differences:
a) as carrier polymer the polymer obtained according to experiment 1 was used after its d had been reduced by grinding to 200 µ, and
b) the reaction time was 30 hours instead of 18 hours.

Like in experiment 1, 8 g of the polymer carrier was treated with the solution containing 0.0095 mmol palladium acetate to obtain a content of fresh palladium of 126 ppmw. 98 g copolymer was obtained with a d of 400 µ and a palladium content of 10 ppmw. The average polymerization rate over the first 4 hours was 3.5 kg copolymer/(g palladium.hour). The average polymerization rate over 30 hours was 3.0 kg copolymer/(g palladium.hour).

Experiment 1 shows the preparation of a carrier polymer by the gas phase polymerization of carbon monoxide with ethene, for use in the gas phase polymerizations of experiments 2 and 3. The polymer carrier used in Experiment 1 was a polymer obtained in a liquid phase process.

Experiments 1 and 2 show that the catalysts deposited on the polymer carriers as obtained in a liquid phase process as well as the catalysts deposited on the polymer carriers as obtained in a gas phase process show a high decay rate in the gas phase process, viz. up to 50% over 14 run hours.

Comparison of experiment 2 with experiment 3 reveals that grinding the carrier polymer obtained in the gas phase process has a beneficial effect on the initial reaction rate and also provides a reduced rate of decay of the catalyst activity. In the experiments the initial rate increased from 2.0 kg copolymer/(g palladium.hour to 3.5 kg copolymer/(g palladium.hour) and the decay rate decreased dramatically from about 50% decay over 14 run hours to about 15% decay over 26 run hours.

It was established by NMR analysis that the carbon monoxide/ethene copolymers prepared according to experiments 1-3 were built up of linear chains in which the units originating in carbon monoxide and the units originating in ethene were present in an alternating order.

## Claims

1. Process for the preparation of polymers, characterized in that
a) linear alternating polymers of carbon monoxide with one or more olefinically unsaturated compounds are prepared by contacting the monomers at elevated temperature and pressure with a catalyst on carrier containing a Group VIII metal,
b) the preparation is carried out continuously and as a gas phase polymerization, and
c) during the polymerization a fraction of the formed polymer product is recycled to the polymerization mixture, subsequent to reducing the average particle diameter thereof and to supplying fresh catalyst thereto.

2. Process according to claim 1, characterized in that the fraction to be recycled has been obtained from the formed polymer product by grinding, this fraction constitutes 0.1-10 %w of the formed polymer product and has an average particle diameter which is less than 75% of that of the formed product.

3. Process according to claim 1 or 2, characterized in that the carrier has an average particle diameter of between 10 and 1000 µ.

4. Process according to one or more of claims 1-3, characterized in that the catalyst contains palladium as Group VIII metal and in addition a phosphorus bidentate ligand of the general formula (R¹)₂P-R-P(R¹)₂ in which R¹ represents an optionally polar substituted hydrocarbyl group and R represents a divalent organic bridging group containing at least two carbon atoms in the bridge and a Lewis acid/Brönsted acid based mixture.

5. Process according to claim 4, characterized in that the catalyst contains 25-10,000 mg Group VIII metal per kg carrier, in that the phosphorus bidentate ligand is present in a quantity of 0.75-1.5 mol per gram atom Group VIII metal and in that the Lewis acid/Brönsted acid based mixture is present in the catalyst in such a quantity that the catalyst contains 1-100 mol of the Lewis acid per gram atom Group VIII metal, the Lewis acid/Brönsted acid based mixture is based on 0.5-5 mol Brönsted acid per mol Lewis acid.

6. Process according to one or more of claims 1-5, characterized in that the carrier is a polymer that as regards structure and composition corresponds substantially with the polymer to be prepared.

7. Process according to one or more of claims 1-6, characterized in that as olefinically unsaturated compounds one or more hydrocarbons are used such as ethene or a mixture of ethene with another olefinically unsaturated hydrocarbon such as propene.

8. Process according to one or more of claims 1-7, characterized in that per mol olefinically unsaturated compound to be polymerized, a quantity of catalyst is used which contains 10⁻⁶ to 10⁻⁴ gram atom Group VIII metal, and in that the polymerization is carried out at a temperature of 30-130 °C, a pressure of 5-100 bar and a molar ratio of the olefinically unsaturated compounds relative to carbon monoxide of 5:1 to 1:5.

## Patentansprüche

1. Verfahren zur Herstellung von Polymeren, dadurch gekennzeichnet, daß
a) lineare alternierende Polymere aus Kohlenmonoxid und einer oder mehreren olefinisch ungesättigten Verbindungen durch Inkontaktbringen der Monomeren bei erhöhter Temperatur und erhöhtem Druck mit einem Katalysator, der ein Gruppe VIII-Metall auf einem Träger enthält, hergestellt werden,
b) worin die Herstellung kontinuierlich und als eine Gasphasenpolymerisation ausgeführt wird, und
c) worin während der Polymerisation ein Teil des gebildeten Polymerproduktes zu dem Polymerisationsgemisch recycliert wird, nach Verringern des mittleren Teilchendurchmessers hievon und nach Zuführen von frischem Katalysator hiezu.

2. Verfahren nach Anspruch 1, dadurch gekennzeichnet, daß die zu recyclierende Fraktion aus dem gebildeten Polymerprodukt durch Mahlen erhalten worden ist, wobei diese Fraktion 0,1 bis 10 Gew.-% des gebildeten Polymerproduktes ausmacht und einen mittleren Teilchendurchmesser aufweist, der weniger als 75 % desjenigen des gebildeten Produktes beträgt.

3. Verfahren nach Anspruch 1 oder 2, dadurch gekennzeichnet, daß der Träger einen mittleren Teilchendurchmesser von 10 bis 1.000 µ aufweist.

4. Verfahren nach einem oder mehreren der Ansprüche 1 bis 3, dadurch gekennzeichnet, daß der Katalysator Palladium als Gruppe VIII-Metall enthält und zusätzlich einen Phosphorbidentatliganden mit der allgemeinen Formel (R¹)₂P-R-P(R¹)₂ enthält, worin R¹ eine gegebenenfalls polar substituierte Hydrocarbylgruppe darstellt und R eine zweiwertige organische Brückengruppe mit einem Gehalt an wenigstens 2 Kohlenstoffatomen in der Brücke bedeutet, und ein Gemisch auf Basis Lewis-Säure/Brönsted-Säure enthält.

5. Verfahren nach Anspruch 4, dadurch gekennzeichnet, daß der Katalysator 25 bis 10.000 mg Gruppe VIII-Metall je kg Träger enthält, daß der Phosphorbidentatligand in einer Menge von 0,75 bis 1,5 Mol je Gramm-Atom Gruppe VIII-Metall vorliegt und daß das Gemisch auf Basis Lewis-Säure/Brönsted-Säure in dem Katalysator in einer solchen Menge vorliegt, daß der Katalysator 1 bis 100 Mol Lewis-Säure je Gramm-Atom Gruppe VIII-Metall enthält, wobei das Gemisch auf Basis Lewis-Säure/Brönsted-Säure auf 0,5 bis 5 Mol Brönsted-Säure je Mol Lewis-Säure basiert.

6. Verfahren nach einem oder mehreren der Ansprüche 1 bis 5, dadurch gekennzeichnet, daß der Träger ein Polymer ist, das hinsichtlich Strukur und Zusammensetzung im wesentlichen dem herzustellenden Polymer entspricht.

7. Verfahren nach einem oder mehreren der Ansprüche 1 bis 6, dadurch gekennzeichnet, daß als olefinisch ungesättigte Verbindungen ein oder mehrere Kohlenwasserstoffe verwendet werden, wie Ethen oder ein Gemisch aus Ethen mit einem anderen olefinisch ungesättigten Kohlenwasserstoff, wie Propen.

8. Verfahren nach einem oder mehreren der Ansprüche 1 bis 7, dadurch gekennzeichnet, daß je Mol olefinisch ungesättigter, zu polymerisierender Verbindung eine Katalysatormenge verwendet wird, die 10⁻⁶ bis 10⁻⁴ Gramm-Atom Gruppe VIII-Metall enthält, und daß die Polymerisation bei einer Temperatur von 30 bis 130°C, einem Druck von 5 bis 100 bar und einem Mol-Verhältnis der olefinisch ungesättigten Verbindungen zu Kohlenmonoxid von 5:1 bis 1:5 ausgeführt wird.

## Revendications

1. Procédé de préparation de polymères,
a) conformément auquel on prépare des polymères alternants et linéaires du monoxyde de carbone et d'un ou plusieurs composés oléfiniquement insaturés, par la mise en contact des monomères à température et pression élevées, avec un catalyseur contenant un métal du groupe VIII, sur un support,
b) conformément auquel on entreprend la préparation de façon continue et sous forme de polymérisation en phase gazeuse et
c) conformément auquel, au cours de la polymérisation, on recycle une fraction du polymère produit au mélange de polymérisation, subséquemment à la réduction de son diamètre moyen des particules et à son alimentation en catalyseur frais.

2. Procédé suivant la revendication 1, caractérisé en ce que la fraction à recycler a été obtenue à partir du polymère produit formé par broyage, cette fraction constitue de 0,1 à 10% en poids du polymère produit formé et possède un diamètre moyen des particules qui est inférieur à 75% de celui du produit formé.

3. Procédé suivant la revendication 1 ou 2, caractérisé en ce que le support possède un diamètre moyen des particules compris entre 10 et 1000 µ.

4. Procédé suivant une ou plusieurs des revendications 1 à 3, caractérisé en ce que le catalyseur contient du palladium, à titre de métal du groupe VIII et, en outre, un ligand bidentate du phosphore de la formule générale (R¹)₂P-R-P(R¹)₂ dans laquelle R¹ représente un radical hydrocarbyle à substitution polaire éventuelle et R représente un groupe de pontage organique divalent contenant au moins deux atomes de carbone dans le pont et un mélange à base d'acide de Lewis/acide de Brönsted.

5. Procédé suivant la revendication 4, caractérisé en ce que le catalyseur contient 25 à 10.000 mg de métal du groupe VIII par kg de support, en ce que le ligand bidendate du phosphore est présent en une proportion de 0,75 à 1,5 mole par atome-gramme de métal du groupe VIII et en ce que le mélange à base d'acide de Lewis/acide de Brönsted est présent dans le catalyseur, en une proportion telle que le catalyseur contienne de 1 à 100 moles d'acide de Lewis par atome-gramme de métal du groupe VIII, le mélange à base d'acide de Lewis/ acide de Brönsted est basé sur 0,5 à 5 moles d'acide de Brönsted par mole d'acide de Lewis.

6. Procédé suivant une ou plusieurs des revendications 1 à 5, caractérisé en ce que le support est un polymère qui correspond sensiblement, quant à la structure et à la composition, au polymère à préparer.

7. Procédé suivant une ou plusieurs des revendications 1 à 6, caractérisé en ce que, à titre de composés oléfiniquement insaturés, on utilise un ou plusieurs hydrocarbures, comme l'éthène ou un mélange d'éthène et d'un autre hydrocarbure oléfiniquement insaturés, tel que le propène.

8. Procédé suivant une ou plusieurs des revendications 1 à 7, caractérisé en ce que, par mole de composé oléfiniquement insaturé à polymériser, on utilise une proportion de catalyseur qui contient 10⁻⁶ à 10⁻⁴ atome-gramme de métal du groupe VIII et en ce que l'on entreprend la polymérisation à une température de 30 à 130°C, sous une pression de 5 à 100 bars et avec un rapport molaire des composés oléfiniquement insaturés au monoxyde de carbone de 5:1 à 1:5.
